# EUROPEAN PATENT APPLICATION

(11) **EP 0 593 259 A2**
(43) Date of publication of application: **20.04.1994**
(21) Application number: 93308113.5
(22) Date of filing: 12.10.1993
(51) Int. Cl.: G11B 33/04

(54) **Device for storing information recording discs**

(30) Priority: 14.10.1992 JP 276034/92
(71) Applicant: SLIDEX CORPORATION, Tokyo 171 (JP)
(72) Inventor: Ozeki, Jiro, Toshima-ku, Tokyo (JP)
(74) Representative: Jackson, Peter Arthur

(57) **Abstract**

A device for storing information recording discs is disclosed. The device comprises one or more file frames, each made of a hard material and having at least one substantially straight edge portion. The file frame is adapted to accommodate a plurality of substantially flat information recording medium in a plane. The device further includes a tray of a substantially rectangular configuration. The tray is formed at a top surface with a plurality of transversely extending grooves each for receiving the edge portion of the file frame. The groove of the tray has a bottom portion and a pair of opposed side walls, the side walls being spaced apart each other so that the file frame stored in the groove can be swung about the substantially straight edge portion which is in substantial contact with the bottom portion of the groove.

## Description

The present invention relates to a device for storing information recording medium such as recording discs. More particularly, the present invention pertains to a device for storing a plurality of recording discs in a manner that contents of the recording discs can be accessed efficiently.

More specifically, the present invention relates to a device for storing a plurality of recording discs which includes file frames for storing recording discs and a tray for supporting a plurality of such file frames at lower edge portions thereof in a manner that the file frames can be turned over about the lower edge portions for visually accessing indices designating recorded contents of the discs as desired.

Conventionally, recording discs have been contained in rectangular file frames made of plastic material. In each of the file frames, an information sheet is kept to indicate information recorded in the disc stored in the same file frame. Floppy discs are contained in a thin case or a cover on which labels are placed for indicating the information stored on the discs.

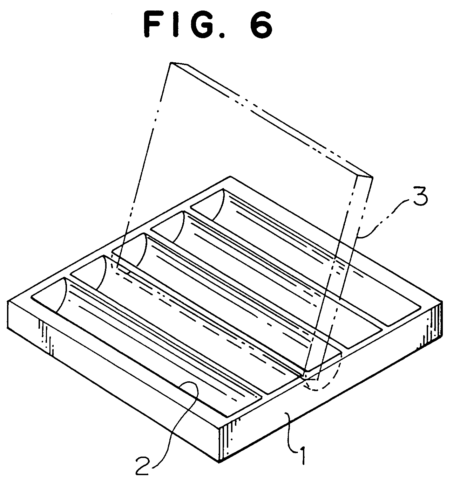

In order to store these recording discs or floppy discs, there have conventionally been provided a tray as shown generally by a reference numeral 1 in Figure 6. The tray 1 has a plurality of transversely extending grooves 2 formed on the top surface. The groove 2 has a semi-circular cross-section and adapted to receive an edge of the recording disc or floppy disc 3 as shown in Figure 6. The groove 2 is therefore of a length to accommodate the edge portion of the disc and of a width so that the disc can be turned about the edge for a certain angle to visually access the information sheet or the label to recognize the information recorded in the disc.

A plurality of such discs 3 are stored in the same tray 1 in a side-by-side relationship. A desired disc can be indexed by turning the discs one-by-one and investigate the information sheet in the file frame or the label on the cover.

According to the conventional file frame storing tray, indexing has been a troublesome task in the case where a number of discs are stored in a single tray. File frames have to be turned one-by one repeatedly until a desired disc is reached.

The present invention has therefore an object to provide a device for recording a plurality of information recording discs in a manner that access to a desired disc can be made more efficiently than in the conventional device.

According to the present invention, the above and other objects can be accomplished by a device for storing information recording discs, the device comprising at least one file frame made of a hard material and having at least one substantially straight edge portion, the file frame being adapted to accommodate a plurality of substantially flat information recording medium in a plane, and a tray of a substantially rectangular configuration, the tray being formed at a top surface with a plurality of transversely extending grooves each for receiving the edge portion of the file frame. The groove of the tray has a bottom portion and a pair of opposed side walls, the side walls being spaced apart each other so that the file frame stored in the groove can be swung about the substantially straight edge portion which is in substantial contact with the bottom portion of the groove.

According to the present invention, a plurality of information recording mediums such as information recording hard discs or floppy discs can be stored in a single file frame. A plurality of such file frames each storing a plurality of information recording discs are stored in a single tray. Each of the file frames can be visually accessed by turning them one-by-one. Since the file frame carries a plurality of the information recording mediums in a single plane, the information recording mediums can be seen at the same time to facilitate indexing a desired recording medium.

The invention will now be described with reference to accompanying drawings which show preferred embodiments of the present invention.
Figure 1 is a perspective view of an information recording medium storing device in accordance with one embodiment of the present invention;
Figure 2 is a plan view of the file frame used in the embodiment of Figure 1;
Figure 3 is a sectional view of the device shown in Figure 1;
Figure 4 is a perspective view showing the device in accordance with another embodiment of the present invention;
Figure 5 is a plan view of the file frame used in the embodiment of Figure 4; and,
Figure 6 is an example of a conventional information recording medium storing device.

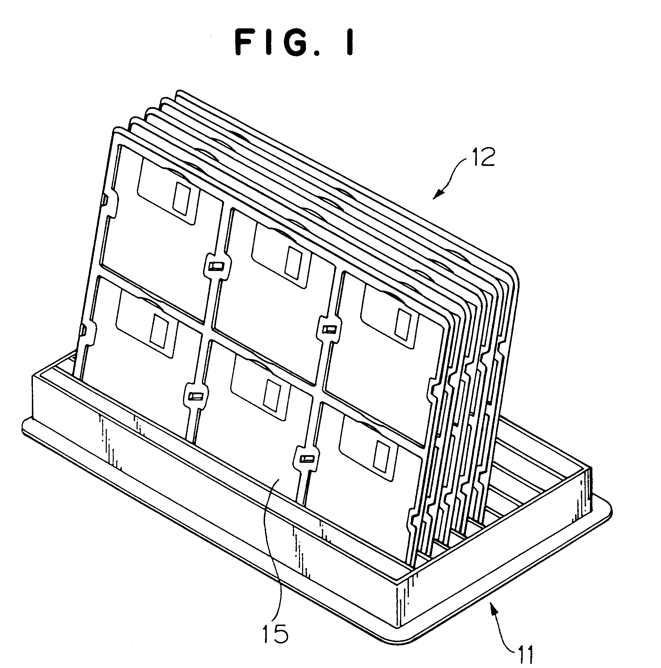

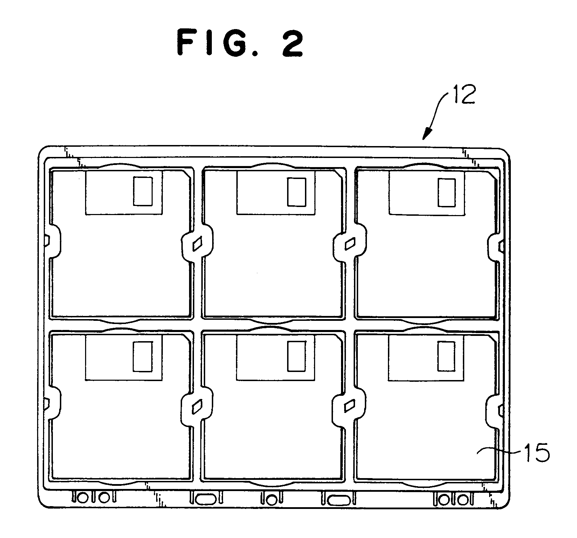

Referring to the drawings, particularly to Figures 1 through 3, there is shown an information recording medium storing device comprising a tray member 11 and a plurality of medium storing file frames 12. The file frame 12 is made of a hard plastics material and designed to contain a plurality of floppy discs 15 in a plane. The file frame 12 has a shape as shown in Figure 2 and may be made in accordance with the Japanese patent disclosure No. Sho 62-124538.

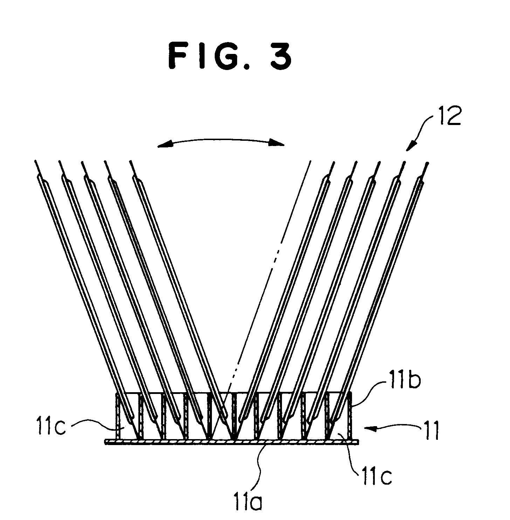

As shown in Figures 1 and 3, the tray member 11 has a substantially flat and rectangular bottom plate 11a and a plurality of transversely extending upright partition walls 11b. A pair of adjacent partition walls 11b define therebetween a groove 11c which is adapted to receive a lower edge portion of the file frame 12.

The groove 12 has a length which is slightly larger than the length of the lower edge portion of the file frame 12. The pair of adjacent walls 11b defining the groove 11c are spaced apart each other so as to allow the file frame 12 received at the lower edge portion in the groove 12 to swing about the lower edge portion with the lower edge portion in contact with the bottom plate 11a as shown in Figure 3.

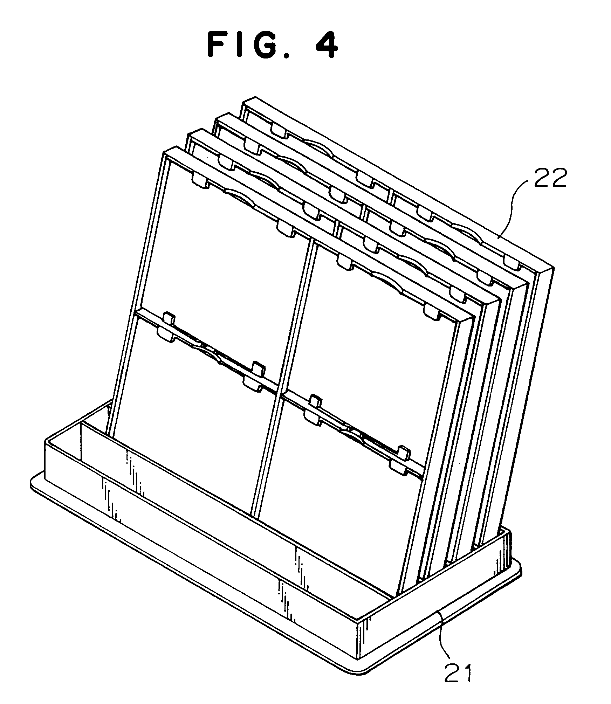

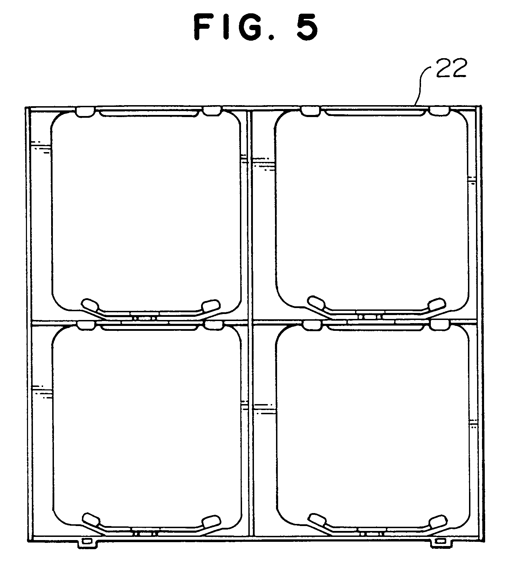

Referring to Figures 4 and 5, there is shown another embodiment of the present invention which is designed for storing a compact disc. The storing device of this embodiment includes a tray 21 which is substantially identical to the tray 11 in the previous embodiment. The tray 21 receives a plurality of file frames 22 for receiving a plurality of compact discs in a plane.

The present invention has been shown and described with reference to specific examples, however, the invention is in no way limited to the details of the illustrated structures but changes and modifications may be made without departing from the scope of the appended claims. For example, the groove of the tray may be of a semi-circular cross-section having side walls and bottom portion which are contiguous with each other through smooth curved surfaces as shown in Figure 6.

## Claims

1. A device for storing information recording discs, the device comprising;
at least one file frame made of a hard material and having at least one substantially straight edge portion; said file frame being adapted to accommodate a plurality of substantially flat information recording medium in a plane; and,
a tray of a substantially rectangular configuration; said tray being formed at a top surface with a plurality of transversely extending grooves, each for receiving the edge portion of the file frame, said groove of the tray having a bottom portion and a pair of opposed side walls, said side walls being spaced apart each other so that the file frame stored in the groove can be swung about the substantially straight edge portion which is in substantial contact with the bottom portion of the groove.

2. A device in accordance with claim 1 wherein each of said grooves has the pair of opposed side walls and the bottom surface which are contiguous with each other through smooth curved surfaces.

3. A device in accordance with claim 1 wherein said pair of opposed side walls are of upright configuration and the bottom surface is substantially flat.

4. A device for storing at least one information recording medium storing file frame, said file frame being made of a hard material and having at least one substantially straight edge portion; said file frame being adapted to accommodate a plurality of substantially flat information recording medium in a plane; said device including;
a tray of a substantially rectangular configuration; said tray being formed at a top surface with a plurality of transversely extending grooves, each for receiving the edge portion of the file frame, said groove of the tray having a bottom portion and a pair of opposed side walls, said side walls being spaced apart each other so that the file frame stored in the groove can be swung about the substantially straight edge portion which is in substantial contact with the bottom portion of the groove.
